# FASCICULE DE BREVET EUROPEEN

(11) **EP 0 504 012 B1**
(45) Date de publication et mention de la délivrance du brevet: **02.11.1995**
(21) Numéro de dépôt: 92400571.3
(22) Date de dépôt: 05.03.1992
(51) Int. Cl.: G01N 3/04, G01N 3/24

(54) **Dispositif d'essais en compression d'éprouvettes pour essais en cisaillement interlaminaire et procédés d'essai en cisaillement d'éprouvettes, notamment d'éprouvettes courbées**
Druck-Testvorrichtung zur Zwischenschicht-Scherprüfung von Prüflingen, und Scherprüfungsverfahren, insbesondere für biegsame Prüflinge
Device for interlaminer shear testing of specimens in compression and method for shear testing, in particular of curved specimens

(30) Priorité: 08.03.1991 FR 9102835
(43) Date de publication de la demande: 16.09.1992
(73) Titulaire: AEROSPATIALE Société Nationale Industrielle, 75781 Paris Cédex 16 (FR)
(72) Inventeur: Peres, Patrick, F-33160 St. Médard en Jalles (FR); Cussac, Michel, F-33860 La Teste (FR)
(74) Mandataire: Ilgart, Jean-Christophe

(56) Documents cités:
- EP-A- 0 300 702
- EP-A- 0 452 216
- GB-A- 2 151 798
- ASTM SPECIAL TECHNICAL PUBLICATION 636 15 Novembre 1976, PHILADELPHIA US pages123 - 140; SENDECKYJ ET AL.: 'effect of temperature on fatigue response of surface-notched laminate'
- SOVIET INVENTIONS ILLUSTRATED Week 8839, 9 Novembre 1988 Derwent Publications Ltd., London, GB; AN 88-276577/39
- SOVIET INVENTIONS ILLUSTRATED Week 8815, 14 Avril 1988 Derwent Publications Ltd., London, GB; AN 88/104455/15
- SOVIET INVENTIONS ILLUSTRATED Week 8422, 11 Juillet 1984 Derwent Publications Ltd., London, GB; AN 84-139429/22
- PATENT ABSTRACTS OF JAPAN vol. 4, no. 62 (P-10)(544) 9 Mai 1980 & JP-A-55 031 974
- EXPERIMENTAL MECHANICS vol. 15, no. 9, Septembre 1975, WESTPORT US pages 358-364; A.M.C. HOLMES: 'continuous servo-controlled alignment of specimens in materials testing'

## Description

L'invention concerne un dispositif d'essais en compression d'éprouvettes qui présentent deux faces latérales opposées et qui peuvent être, dans l'application principale qui est envisagée actuellement, des fragments de plaques en matériau composite qui ont été entaillés de manière à présenter une zone médiane soumise à du cisaillement entre les différentes couches dont les plaques sont constituées. Ce cisaillement est appelé interlaminaire. Elle concerne aussi des procédés d'essai en cisaillement d'éprouvettes et notamment d'éprouvettes courbes.

Une manière, déjà pratiquée par les inventeurs, de maintenir les éprouvettes entre les plateaux de compression des dispositifs actuels consiste à loger les extrémités des éprouvettes entaillées dans des évidemments de ces plateaux, ce qui ne donne pas en général satisfaction car les inévitables imprécisions de montage, ainsi que le comportement intrinsèquement dissymétrique de l'éprouvette entaillée entraînent nécessairement une inhomogénéité du champ de cisaillement dans la zone médiane entre les entailles, qui fausse la mesure des contraintes de cisaillement représentatives du matériau. C'est pourquoi l'objet essentiel de l'invention est la fourniture d'un dispositif d'essais en compression d'éprouvettes qui soit exempt des défauts signalés ci-dessus et permette au contraire d'obtenir un champ de cisaillement quasi uniforme. Ce dispositif est conçu pour les éprouvettes courbes.

L'article de Holmes "Continuous Servo-Controlled Alignment of Specimens in Materials Testing" paru dans Experimental Mechanics, 1975, vol. 15, n°9, pp. 358-364, décrit une machine d'essais en traction, cisaillement ou flexion pour des éprouvettes courbes qui comprend des mors sans mâchoires, à excavation pour recevoir les extrémités de l'éprouvette.

EP-A-0 300 702 décrit une machine d'essai en compression pour une éprouvette droite dont les faces latérales sont serrées par les mâchoires des mors, les faces d'extrémité n'étant pas soutenues.

EP-A-0 452 216 décrit une machine d'essai en cisaillement pour une éprouvette droite, perpendiculaire à l'effort de cisaillement, dont les extrémités sont serrées dans un étau garni de mâchoires supplémentaires de soutien des faces latérales contre le flambement.

Les éprouvettes sont selon l'invention comprimées entre deux mors dont chacun est composé de deux mâchoires : les mâchoires comportent une surface d'appui d'une des faces latérales des éprouvettes, et une des mâchoires comporte en outre une surface de butée d'une extrémité des éprouvettes. Des moyens pour rapprocher et écarter des mâchoires sont prévus.

De plus, les mâchoires d'au moins un des mors ont des longueurs différentes de sorte que la mâchoire lognue s'étend devant une face convexe de l'éprouvette et jusqu'à une zone médiane de l'éprouvette où le cisaillement est produit. Un très bon soutien de l'éprouvette est alors obtenu. La surface d'appui d'une des mâchoires peut par exemple s'étendre sur une longueur environ deux fois plus importante des éprouvettes que la surface d'appui de l'autre mâchoire.

Les surfaces d'appui des mâchoires sont avantageusement entièrement en contact avec les faces latérales de l'éprouvette et peuvent donc être courbes si ces faces le sont également, afin d'assurer une meilleure tenue des éprouvettes et de diminuer les risques de flexion et de flambage à la compression.

Le dispositif peut être perfectionné si les mâchoires comportant une surface de butée sont également munies d'un embout cylindrique de fixation des mors et d'une face plane de butée des mors. Les risques d'imprécision de montage résultant d'une hyperstaticité du dispositif sont alors réduits.

L'invention concerne encore un procédé utilisant de tels dispositifs pour des éprouvettes courbes pourvues de deux entailles établies sur les faces latérales et encadrant une zone médiane des éprouvettes.

Elle concerne enfin un procédé d'essai en cisaillement d'éprouvettes courbes munies sur deux faces latérales opposées de deux entailles encadrant une zone médiane de l'éprouvette ; il consiste à comprimer les éprouvettes entre des faces d'extrémité joignant les faces latérales, où, si L désigne la distance entre les faces d'extrémité, e la distance entre les faces latérales et r le rayon de courbure de la face latérale concave de l'éprouvette, les relations r/L>5 et L/e<5 sont respectées.

On va maintenant passer au commentaire de l'invention à l'aide des figures suivantes annexées :
- la figure 1 est une vue d'ensemble du dispositif,
- la figure 2 représente les parties essentielles du dispositif,
- la figure 3 représente ces parties essentielles en vue éclatée, et
- la figure 4 représente partiellement une réalisation du dispositif pleinement conforme à l'invention.

Certaines des figures portent sur des machines d'essai d'éprouvettes droites mais leur description est utilisable immédiatement ou avec des transformations mineures pour des éprouvettes courbes.

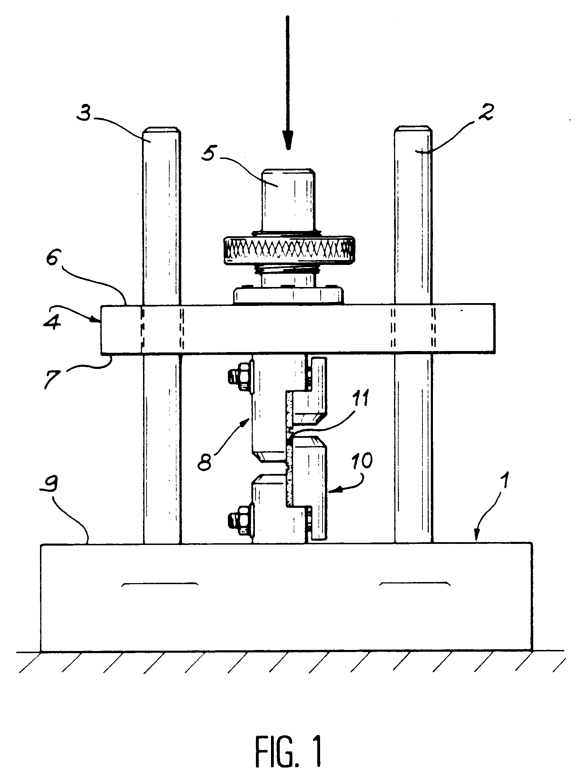

Le dispositif comprend (figure 1) un socle 1 qui est une structure fixe au-dessus de laquelle pointent deux colonnes 2 et 3 parallèles. Les colonnes 2 et 3 pénètrent dans des perçages d'un plateau 4 qu'elles guident donc suivant un mouvement coulissant. Les perçages sont munis de paliers non représentés, lisses ou à billes, pour assurer un guidage à jeux et frottements réduits. Un embout 5 est fixé sur une face supérieure 6, opposée au socle 1, du plateau 4. Un moyen de pressage non représenté qui peut être un vérin ou un poids inerte presse sur l'embout 5 et rapproche le plateau 4 du socle 1.

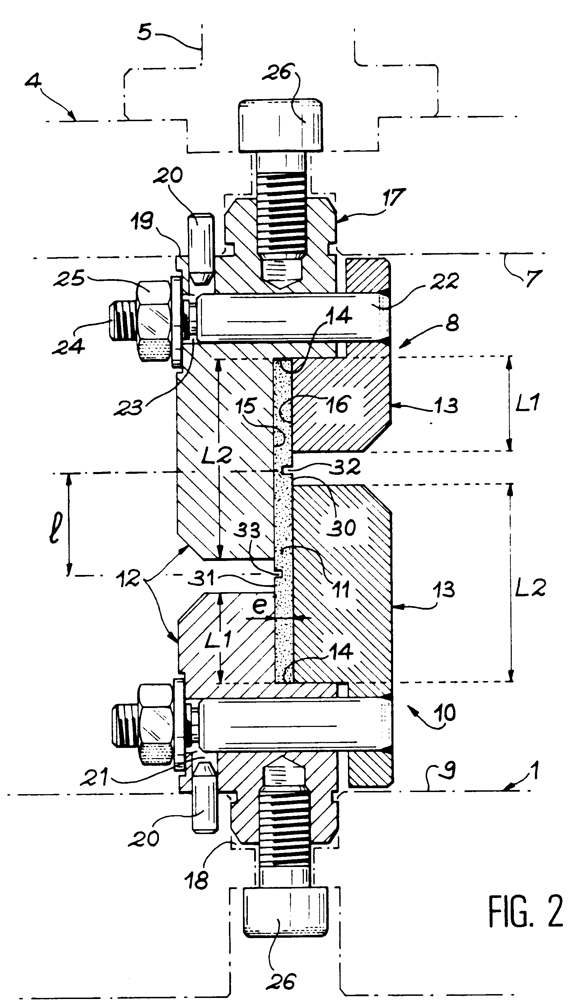

La face inférieure 7 du plateau 4, opposée à la précédente, porte un mors supérieur 8, et la face supérieure 9 du socle 1 porte un mors inférieur 10. Une éprouvette 11 en forme de plaque est serrée entre ces mors, dont la constitution va maintenant être décrite à l'aide de la figure 2.

Chacun d'eux comporte une mâchoire de butée 12 et une mâchoire de serrage 13. Deux surfaces de butée 14, disposées face à face, sont prévues sur les mâchoires de butée 12, et l'éprouvette 11 est comprimée entre elles par ses surfaces extrêmes. Chacune des mâchoires de butée 12 et 13 comporte par ailleurs une surface d'appui plane respective 15 et 16, qui s'étend parallèlement à la direction de compression et s'appuie intégralement sur une des faces principales latérales, planes et opposées, 30 et 31 de l'éprouvette 11.

Les mâchoires de butée 12 comportent un embout 17 cylindrique qui est engagé dans un enfoncement 18 du socle 1, ou du plateau 4 selon le cas, et sert ainsi à fixer les mors 8 et 10. Elles comportent également une face plane 19 perpendiculaire à la direction de compression et qui s'appuie sur la face inférieure 7 du plateau 4 ou la face supérieure 9 du socle 1. Cette disposition permet un montage des mors 8 et 10 avec une souplesse suffisante pour que les éprouvettes 11 soient reçues entre les mors sans introduire d'efforts parasites de flexion ou de torsion. Des pions de détrompage 20 sont toutefois prévus sur le socle 1 et le plateau 4. Ils se logent dans un évidement 21 de la mâchoire de butée 12 respective et permettent de maintenir les mâchoires de butée 12 sensiblement en face l'une de l'autre, de même que les mâchoires de serrage 13.

Les mâchoires de serrage 13 comportent une tige 22 prévue pour pénétrer dans un alésage 23 de la mâchoire de butée 12 associée. Les tiges 22 sont terminées par un filetage 24 qui s'étend hors des mâchoires de butée 12 et autour desquels un écrou 25 est engagé. Le serrage de l'écrou 25 rapproche les mâchoires 12 et 13 et leurs surfaces d'appui 15 et 16, qui encastrent ainsi parfaitement les extrémités de l'éprouvette 11. Par ailleurs, des vis 26 permettent de serrer les mâchoires de butée 12 sur le socle 1 ou le plateau 4.

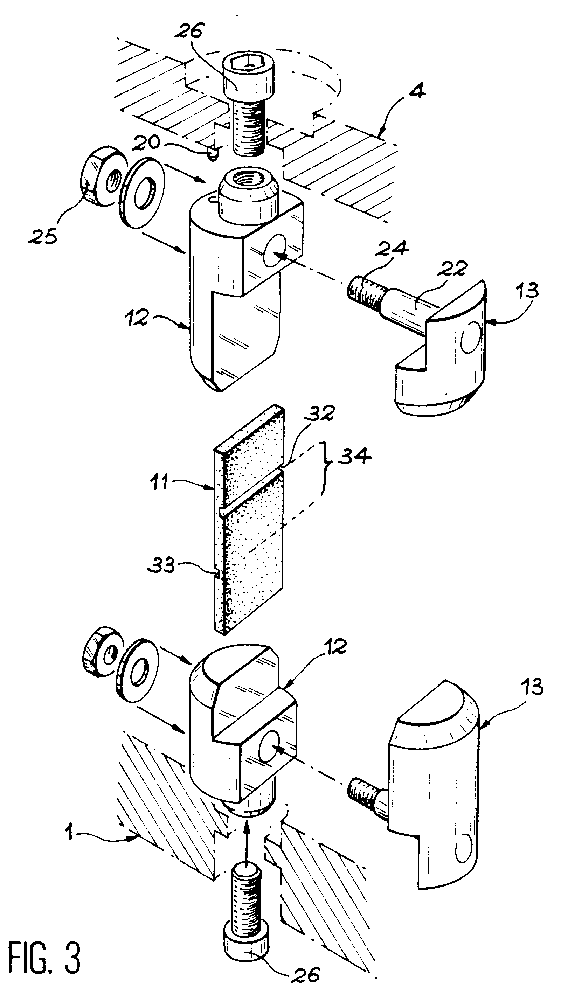

Chacune des faces opposées 30 et 31 de l'éprouvette 11 comporte une entaille, respectivement 32 et 33, qui affaiblit la section de l'éprouvette 11 et s'étend sur toute sa largeur, perpendiculairement à la direction de compression. Les entailles 32 et 33 délimitent donc une zone médiane 34 sur l'éprouvette 11 (figure 3) où le cisaillement se développe, maximal et quasi homogène à mi-épaisseur de l'éprouvette 11, car chacune des entailles 32 et 33 s'étend en profondeur sur la moitié de cette épaisseur (pour une largeur optimale de 0,5 mm environ). Si l'éprouvette 11 est formée de l'empilement de couches de matériau composite, elle se rompt normalement à cet endroit par une dislocation de l'assemblage des couches. On peut en déduire la résistance du matériau au cisaillement interlaminaire.

On préconise, pour tous les essais de compression d'éprouvettes entaillées, une longueur l entre les entailles 32 et 33 inférieure à σ/τ.e/2, où σ et τ désignent les contraintes de rupture en compression et en cisaillement du matériau et e l'épaisseur de l'éprouvette 11. La longueur l doit cependant être assez grande pour que l'essai soit représentatif. On estime que, dans les matériaux composites à architecture de renforcement tissée, elle doit embrasser au moins trois mailles.

La pureté du cisaillement peut être améliorée si les mâchoires 12 et 13 s'étendent sensiblement jusqu'à l'entaille 32 ou 33 établie sur la face principale 30 ou 31 sur laquelle la mâchoire respective s'appuie : dans la configuration qui est représentée, la mâchoire de serrage 13 du mors inférieur 10 est ainsi beaucoup plus longue que celle du mors supérieur 8, alors que la mâchoire de butée 12 du mors supérieur 8 est beaucoup plus longue que celle du mors inférieur 10. La zone médiane 34 est ainsi fermement maintenue entre les mâchoires longues des deux mors 8 et 10. Dans la configuration représentée, les mâchoires longues ont une surface d'appui 15 ou 16 qui s'étend sur une longueur L2 approximativement deux fois plus longue que la longueur L1 de la surface d'appui des mâchoires courtes.

Le dispositif est encore avantageux pour des essais en compression pure, sans cisaillement. On utilise alors des éprouvettes de forme semblable mais sans entailles 32 et 33. L'avantage du dispositif réside essentiellement dans l'empêchement du flambage dans la partie médiane 34 de l'éprouvette, grâce au serrage entre les deux mâchoires longues, dans ce cas également.

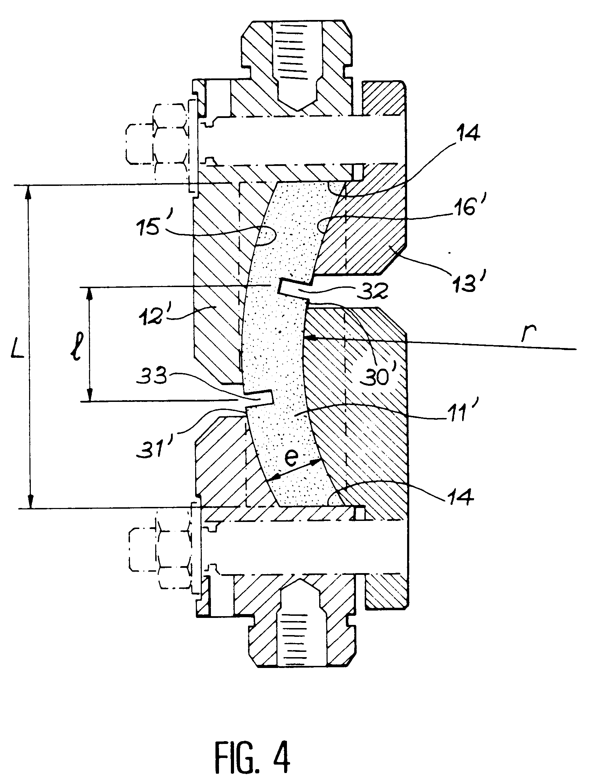

Une autre disposition, représentée à la figure 4, montre que l'essai peut concerner des éprouvettes courbes 11′.

Les modifications du dispositif par rapport aux figures précédentes consistent en ce que les mâchoires 12′ et 13′ comportent de préférence des surfaces d'appui courbes 15′ et 16′ afin que les faces latérales opposées 30′ et 31′ de l'éprouvette courbe 11′ s'appuient par presque toute leur étendue sur la totalité des surfaces d'appui 15′ et 16′. Une meilleure tenue de l'éprouvette courbe 11′ est ainsi obtenue. Ce sont d'ailleurs les surfaces d'appui 15′ concaves qui sont les plus utiles à cause de la tendance à l'accroissement de la courbure des éprouvettes courbes 11′ à la compression, qui se traduit par de la flexion et trouble la mesure du cisaillement.

On conseille, pour une bonne qualité des résultats, d'utiliser des éprouvettes courbes 11′ dont la largeur (perpendiculairement à la figure 4) est d'au moins 5 mm, et qui respectent à peu prés les relations L/e<5 et r/L>5, où L désigne la distance entre les surfaces de butée 14, e l'épaisseur de l'éprouvette courbe 11′ et r le rayon de courbure de la face latérale concave 30′ de l'éprouvette courbe 11′. Les entailles 32 et 33 s'étendent par ailleurs jusqu'à la mi-épaisseur de l'éprouvette courbe 11′.

L'essai de cisaillement est effectué comme dans le cas précédent en comprimant les faces extrêmes de l'éprouvette courbe 11′, qui joignent les faces latérales courbes 30′ et 31′, par les surfaces de butée 14.

## Revendications

1. Dispositif d'essai en cisaillement d'éprouvettes (11′) présentant deux faces latérales opposées courbes (30′, 31′), comprenant deux mors (8, 10) entre lesquels les éprouvettes sont comprimées, caractérisé en ce que les mors sont chacun composés de deux mâchoires (12′, 13′) dont chacune comporte une surface d'appui courbe (15′, 16′) d'une face latérale respective des éprouvettes (11′), une des mâchoires comportant en outre une surface de butée (14) des éprouvettes, et des moyens (22, 25) pour rapprocher et écarter les mâchoires, une des mâchoires (12′) étant plus longue que l'autre (13′) dans au moins un des mors devant une face convexe de l'éprouvette et s'étendant jusqu'à une zone médiane, soumise au cisaillement de l'éprouvette (11′)

2. Dispositif d'essai suivant la revendication 1, caractérisé en ce que les mâchoires comportant les surfaces de butée comportent également un embout cylindrique (17) de fixation des mors et une face plane (19) de butée des mors (8, 10).

3. Dispositif d'essai suivant la revendication 1 ou 2, caractérisé en ce qu'un des mors (8) est fixé à un plateau (4) qui coulisse sur des colonnes de guidage (2, 3) solidaires d'une structure fixe (1) à laquelle l'autre mors (10) est fixé.

4. Dispositif d'essai suivant l'une quelconque des revendications 1 à 3, caractérisé en ce que les surfaces d'appui (15′, 16′) des mâchoires (12′, 13′) sont entièrement en contact avec les faces latérales de l'éprouvette (11′).

5. Procédé d'essai en cisaillement d'éprouvettes courbes (11′), caractérisé en ce qu'il comporte l'utilisation d'un dispositif suivant l'une quelconque des revendications 1 à 4 pour des éprouvettes (11′) pourvues de deux entailles (32, 33) établies sur les faces latérales (15′, 16′) et encadrant la zone médiane des éprouvettes.

6. Procédé d'essai en cisaillement d'éprouvettes courbes (11′) suivant la revendication 5, caractérisé en ce qu'il consiste à comprimer les éprouvettes entre des faces d'extrémité joignant les faces latérales (30′, 31′), où, si L désigne la distance entre les faces d'extrémité, e la distance entre les faces latérales et r le rayon de courbure de la face latérale concave (30') de l'éprouvette (11′), les relations r/L>5 et L/e<5 sont respectées.

## Patentansprüche

1. Schertestvorrichtung für Prüflinge (11′), zwei gekrümmte, entgegengesetzte Seitenflächen (30′, 31′) aufweisend, zwei Spanneinrichtungen (8, 10) umfassend, zwischen denen die Prüflinge zusammengedrückt werden,
**dadurch gekennzeichnet**,
daß jede Spanneinrichtung zusammengesetzt ist aus zwei Backen (12′, 13′), von denen jeder eine gekrümmte Stützfläche (15′, 16′) von jeweils einer Seitenfläche der Prüflinge (11′) umfaßt, wobei einer der Backen außerdem eine Anschlagfläche (14) der Prüflinge aufweist, und Einrichtungen (22, 25), um die Backen gegeneinander und auseinander zu bewegen, wobei bei wenigstens einer der Spanneinrichtungen vor einer konvexen Fläche des Prüflings einer der Backen (12′) länger ist als der andere (13′) und sich bis zu einer mittleren Zone erstreckt, die der Abscherung des Prüflings (11′) unterworfen ist.

2. Testvorrichtung nach Anspruch 1, dadurch gekennzeichnet, daß die die Anschlagflächen aufweisenden Backen ebenfalls einen zylindrischen Ansatz (17) zur Befestigung der Spanneinrichtungen umfassen und eine ebene Anschlagfläche (19) der Spanneinrichtungen (8, 10).

3. Testvorrichtung nach Anspruch 1 oder 2, dadurch gekennzeichnet, daß eine der Spanneinrichtungen (8) an einer Platte (4) befestigt ist, die auf Führungssäulen (2, 3) gleitet, die fest verbunden sind mit einer ortsfesten Struktur (1), an der die andere Spanneinrichtung (10) befestigt ist.

4. Testvorrichtung nach einem der Ansprüche 1 bis 3, dadurch gekennzeichnet, daß die Stützflächen (15′, 16′) der Backen (12′, 13′) vollständigen Kontakt haben mit den Seitenflächen des Prüflings (11′).

5. Scherprüfungsverfahren für gekrümmte Prüflinge (11′), dadurch gekennzeichnet, daß es die Verwendung einer Vorrichtung nach einem der Ansprüche 1 bis 4 umfaßt, für Prüflinge (11′), die versehen sind mit zwei Einschnitten (32, 33), hergestellt an den Seitenflächen (15′, 16′) und die Mittelzone der Prüflinge einrahmend.

6. Scherprüfungsverfahren für gekrümmte Prüflinge (11′) nach Anspruch 5, dadurch gekennzeichnet, daß es darin besteht, die Prüflinge zusammenzudrücken zwischen den die Seitenflächen (30′, 31′) verbindenden Endflächen, wobei, wenn L den Abstand zwischen den Endflächen, e den Abstand zwischen den Seitenflächen und r den Krümmungsradius der konkaven Seitenfläche (30′) des Prüflings (11′) darstellt, die Relationen r/L>5 und L/e<5 eingehalten werden.

## Claims

1. Apparatus for the shear testing of testpieces (11′) having two opposite, curved, lateral faces (30′, 31′), comprising two clamping systems (8,10) between which the testpieces are compressed, characterized in that the clamping systems are in each case constituted by two jaws (12′,13′), whereof each has a curved bearing surface (15′,16′) of a respective lateral face of the testpieces (11′), one of the jaws also having an abutment surface (14) of the testpieces, and means (22, 25) for moving together and apart the jaws, one of the jaws (12′) being longer than the other (13′) in at least one of the clamping means in front of a convex space of the testpiece and extending up to a median zone, subject to the shear of the testpiece (11′).

2. Test apparatus according to claim 1, characterized in that the jaws having the abutment surfaces also incorporate a cylindrical end fitting (17) for fixing the clamping systems and a planar abutment face (19) for the clamping systems (8, 10).

3. Test apparatus according to claim 1 or 2, characterized in that one of the clamping systems (8) is fixed to a platen (4), which slides on guide columns (2, 3) integral with a fixed structure (1) to which the other clamping system (10) is fixed.

4. Test apparatus according to any one of the claims 1 to 3, characterized in that the bearing surfaces (15′,16′) of the jaws (12',13') are entirely in contact with the lateral faces of the testpiece (11').

5. Process for the shear testing of curved testpieces (11'), characterized in that it comprises the use of an apparatus according to any one of the claims 1 to 4 for testpieces (11′) provided with two notches (22,33) on the lateral faces (15′,16′) and surrounding the median zone of the testpieces.

6. Process for the shear testing of curved testpieces (11′) according to claim 5, characterized in that it consists of compressing the testpieces between end faces joining the lateral faces (30′,31′) where, if L designates the distance between the end faces, e the distance between the lateral faces and r the radius of curvature of the lateral concave face (30′) of the testpiece (11′), the relations r/L→5 and L/e←5 are respected.
